# EUROPÄISCHE PATENTSCHRIFT

(11) **EP 3 859 853 B1**
(45) Veröffentlichungstag und Bekanntmachung des Hinweises auf die Patenterteilung: **17.04.2024**
(21) Anmeldenummer: 21151717.2
(22) Anmeldetag: 15.01.2021
(51) Int. Cl.: H01M 10/04, H01M 50/242, H01M 50/289, H01M 10/0587, H01M 50/213, H01M 50/249

(54) **BATTERIEANORDNUNG**
BATTERY ASSEMBLY
AGENCEMENT DE BATTERIES

(30) Priorität: 31.01.2020 DE 102020201165
(43) Veröffentlichungstag der Anmeldung: 04.08.2021
(60) Teilanmeldung: 24160864.5
(73) Patentinhaber: Robert Bosch GmbH, 70442 Stuttgart (DE)
(72) Erfinder: Mehlo, Dennis, 72766 Reutlingen (DE); Bayer, Lisa, 70197 Stuttgart (DE)

(56) Entgegenhaltungen:
- WO-A1-2018/154528
- DE-A1- 4 226 428
- DE-A1-102010 012 930
- DE-A1-102012 219 022
- US-A1- 2020 020 900

## Beschreibung

### Stand der Technik

Die vorliegende Erfindung betrifft eine Batterieanordnung mit einem Batteriepack mit mechanisch eingespannten Batteriezellen. Batteriepacks zur Verwendung als Energiespeicher in Fahrzeugen sind häufig aus einer Mehrzahl an Einzelzellen, wie beispielsweise Li-lonen-Zellen, zusammengesetzt. Eine Lagerung solcher Batteriezellen erfolgt meist mittels einfacher Zellhalter. Bekannte Zellhalter können jedoch häufig nicht die fertigungsbedingten oder aus Volumenveränderungen resultierenden Toleranzen in den Abmessungen der Batteriezellen ausgleichen und eine definierte und sichere Lagerung der Batteriezellen, insbesondere bei mechanischen Belastungen, wie einem Aufprall des Batteriepacks auf einen Boden, sicherstellen.

In der WO 2018/154528 A1 ist ein Batteriepack mit zylindrischen Batteriezellen beschrieben. In der DE 102012 219 022 A1 ist ein Brennstoffzellenstack mit einem Spannsystem und in der US 2020/0020900 A1 ein Batteriemodul beschrieben. In der DE 10 2010 012 930 A1 ist eine Batterie und in der DE 42 26 428 C2 ein Batterieblockkasten mit einer Spannvorrichtung beschrieben.

### Offenbarung der Erfindung

Die erfindungsgemäße Batterieanordnung mit den Merkmalen des Anspruchs 1 bietet demgegenüber den Vorteil einer verbesserten Halterung von Batteriezellen, wobei eine zuverlässige mechanische Fixierung der Batteriezellen, insbesondere bei mechanischen Krafteinwirkungen und bei wechselnden Umgebungstemperaturen, ermöglicht wird. Dies wird erfindungsgemäß erreicht durch eine Batterieanordnung umfassend einen Batteriepack mit einer Vielzahl an Batteriezellen.

Die Batteriezellen sind jeweils parallel zu einer Längsachse angeordnet und axial und/oder radial nebeneinander angeordnet. Vorzugsweise sind sowohl axial als auch radial zumindest zwei Batteriezellen nebeneinander angeordnet.

Weiterhin umfasst die Batterieanordnung zwei Spannplatten, welche an jeweils einer axialen Stirnseite des Batteriepacks angeordnet sind, und zumindest einen Zuganker. Der zumindest eine Zuganker ist eingerichtet, die beiden Spannplatten gegeneinander zu verspannen, um eine Vorspannkraft auf den Batteriepack aufzubringen. Beispielsweise kann der Zuganker stangenförmig sein. Vorzugsweise erstreckt sich der Zuganker in axialer Richtung der Längsachse durch den gesamten Batteriepack hindurch. Vorzugsweise können mehrere Zuganker vorgesehen sein, welche insbesondere jeweils parallel zur Längsachse angeordnet sind.

Zudem umfasst die Batterieanordnung zumindest ein Federelement pro Zuganker. Das Federelement ist elastisch verformbar ausgebildet, um einen Längenausgleich der Batteriezellen zu erlauben. Insbesondere weist das Federelement dabei eine vordefinierte Elastizität auf, welche so ausgelegt ist, dass das Federelement den, beispielsweise durch Änderungen einer Umgebungstemperatur verursachten, Längenausgleich der Batteriezelle auszugleichen, oder um äußere mechanische Krafteinwirkungen, beispielsweise durch einen Aufprall des Batterieparks auf den Boden, abzufedern. Insbesondere ist das Federelement dabei so ausgelegt, dass die elastische Fixierung der Batteriezellen größer als eine bei einem Aufprall auf den Boden auf die Batteriezellen einwirkende mechanische Belastung ist, um eine Beschädigung der Batteriezellen durch unerwünschte Relativbewegungen zu vermeiden.

Ferner ist das Federelement vorzugsweise so ausgelegt, dass im normalen Betrieb, das heißt, ohne äußere Krafteinwirkung, die auf den Batteriepack wirkende Vorspannkraft kleiner als eine vordefinierte maximale Vorspannkraft ist, um eine plastische Deformation der Batteriezellen aufgrund einer zu hohen statischen Verspannung zu vermeiden.

Vorzugsweise ist der Zuganker dabei so ausgebildet, dass dieser unter der Vorspannkraft nur geringfügig verformt wird. Insbesondere weist der Zuganker hierfür ein hohes Elastizitätsmodul auf, vorzugsweise mindestens 150*10⁹ N/m². Bevorzugt weisen die Spannplatten ebenfalls nur eine geringe Verformbarkeit bei Beanspruchung durch die Vorspannkraft auf. Besonders bevorzugt sind Zuganker und/oder Spannplatten aus Metall gebildet. Insbesondere Stähle mit einer hohen Elastizitätsgrenze von mindestens 1*10⁹ N/m² eignen sich hierfür. Dadurch wird der Längenausgleich gezielt durch das Federelement herbeigeführt.

Die spezielle Verspannung des Batteriepacks erlaubt dabei eine gleichmäßige Verteilung der Vorspannkraft auf die Batteriezellen. Zudem ermöglicht die Verformbarkeit des Federelements einen Ausgleich von aufgrund unterschiedlicher thermischer Ausdehnungskoeffizienten verursachten unterschiedlichen relativen Längenausdehnungen der einzelnen Bauteile der Batterieanordnung zu kompensieren. Mit anderen Worten erlaubt das Federelement eine Temperatur- und/oder Lebensdauer-abhängige Verformung der Batteriezellen krafttechnisch zu kompensieren. Insbesondere wird hierbei in sämtlichen Betriebszuständen eine im wesentlichen konstante Vorspannkraft auf den Batteriepack aufgebracht.

Die Batterieanordnung eignet sich insbesondere für den Einsatz in Zweirädern, wie beispielsweise Elektrofahrrädern, bei welchen eine Entnahme der Batterieanordnung, beispielsweise zum Laden, erforderlich sein kann. Zudem sind hierbei die Batteriezellen meist nur wenig vor Umgebungsbedingungen geschützt, sodass sich Temperaturschwankungen unmittelbar auf die Batteriezellen auswirken können. Die spezielle Verspannung mittels Spannplatten, Zuganker und Federelement bewirkt dabei eine besonders zuverlässige mechanische Fixierung in sämtlichen Betriebszuständen, sowie insbesondere unabhängig von Toleranzen, wie beispielsweise Fertigungstoleranzen der Batteriezellen.

Die Unteransprüche haben bevorzugte Weiterbildungen der Erfindung zum Inhalt.

Bevorzugt ist das Federelement zwischen dem Zuganker und einer der beiden Spannplatten angeordnet. Besonders bevorzugt ist das Federelement dabei auf einer den Batteriezellen abgewandten Seite der Spannplatte angeordnet. Besonders bevorzugt weisen die Spannplatten jeweils eine Durchgangsöffnung auf, durch welche sich der Zuganker erstreckt, wobei insbesondere jeweils auf einer den Batteriezellen abgewandten Seite der Spannplatten Anschläge am Zuganker vorgesehen sind, um die Verspannung zu ermöglichen. Insbesondere ist das Federelement durch diese Anordnung auf Druck beansprucht. Dadurch ergibt sich besonders einfache Konstruktion der Batterieanordnung.

Besonders bevorzugt umfasst die Batterieanordnung jeweils zwei Federelemente pro Zuganker. Zwischen jeder Spannplatte und jedem Zuganker ist dabei jeweils ein Federelement angeordnet. Das heißt, an den beiden axialen Enden des Zugankers, an welchen jeweils eine Spannplatte vorliegt, ist ein Federelement vorgesehen, um einen beidseitigen Längenausgleich bereitzustellen. Dadurch kann eine besonders gezielte und zuverlässige Verspannung des Batteriepacks erzielt werden. Die beiden einem Zuganker zugeordneten Federelemente können dabei identisch oder unterschiedlich ausgelegt werden. Im letzteren Fall, also bei unterschiedlichen Federelementen an jedem Zuganker, können beispielsweise verschiedene Federelastizitäten dieser Federelemente vorgesehen sein, um eine besonders flexible und präzise Anpassung der Vorspannkraft an unterschiedlichste Betriebszustände zu ermöglichen.

Vorzugsweise ist das Federelement als Tellerfeder oder als Spiralfeder ausgebildet, um eine besonders einfache und kostengünstige Herstellung der Batterieanordnung zu erlauben. Insbesondere kann das Federelement auch mehrere Tellerfedern umfassen, welche vorzugsweise in Serie und/oder parallel zueinander angeordnet sind. Alternativ zu Tellerfedern können auch andere Federelemente, wie beispielsweise Schraubenfedern, vorgesehen sein, welche eine gewisse elastische Verformbarkeit aufweisen, um den Längenausgleich der Batteriezellen zu erlauben.

Besonders bevorzugt weist das Federelement eine geringe Federkonstante auf. Vorzugsweise beträgt die Federkonstante maximal 1000 N/m, insbesondere maximal 100 N/m. Besonders bevorzugt ist das Federelement dabei aus einem Material mit geringem Elastizitätsmodul, insbesondere von maximal 200*10⁹ N/m², insbesondere maximal 100*10⁹ N/m² gebildet. Beispielsweise kann das Federelement aus Metall gebildet sein. Dadurch erfolgt bei einer Längenänderung der Batteriezellen eine besonders geringe Änderung der Vorspannkraft, was sich besonders günstig auf eine zuverlässige Einspannung des Batterieparks auswirkt. Die Federelemente ermöglichen somit insbesondere eine näherungsweise Weg- bzw. Hub-unabhängige Verspannung der Batteriezellen, sodass eine besonders gezielte, im wesentlichen lebensdauerunabhängige, vordefinierte Vorspannkraft eingestellt werden kann. Ferner kann eine Geometrie des Federelements speziell so ausgebildet sein, um diesen Effekt eines Längenausgleichs bei annähernd konstanter Vorspannkraft zu unterstützen.

Vorzugsweise weisen die Spannplatten eine hohe Biegesteifigkeit auf. Die Biegesteifigkeit beträgt insbesondere mindestens 5000 N/m, insbesondere mindestens 10000 N/m. Vorzugsweise weisen die Spannplatten ein hohes Elastizitätsmodul, insbesondere von mindestens 150*10⁹ N/m², insbesondere mindestens 400*10⁹ N/m² auf. Durch besonders steife Spannplatten kann die Vorspannkraft besonders homogen in sämtliche Batteriezellen des Batteriepacks eingeleitet werden, um einen zuverlässig verspannten Verbund der Batteriezellen bereitstellen zu können.

Weiter bevorzugt sind die Spannplatten im unbelasteten Zustand gebogen ausgebildet. Vorzugsweise sind die Spannplatten dabei so ausgebildet, dass diese unter Belastung mit der Vorspannkraft ebene Platte bilden. Das heißt, die Spannplatten sind insbesondere so ausgelegt, dass diese beim Zusammenbau des Batteriepacks entsprechend verformt werden, um ebene Platte zu bilden, sodass die Spannplatten eben an den Stirnseiten des Batteriepacks aufliegen können. Durch eine derartige vorgebogene Konstruktion der Spannplatten kann eine besonders gleichmäßige und homogene Aufbringung der Vorspannkraft auf die einzelnen Batteriezellen des Batteriepacks sichergestellt werden.

Besonders bevorzugt sind das Federelement und die Spannplatte als separate Bauteile ausgebildet. Dadurch können Federelement und Spannplatte besonders einfach, kostengünstig und flexibel an die jeweiligen speziellen mechanischen Anforderungen angepasst werden.

Vorzugsweise sind das Federelement die Spannplatte einstückig ausgebildet, um eine besonders einfache Konstruktion der Batterieanordnung mit wenigen Bauteilen zu ermöglichen. Insbesondere wird durch eine derartige Konstruktion von Federelement und Spannplatte zusammen als ein einstückiges Bauteil ein besonders einfacher Zusammenbau der Batterieanordnung ermöglicht.

Weiterhin ist es vorteilhaft, wenn das Federelement so ausgebildet ist, dass eine vordefinierte maximale Vorspannkraft vorliegt, wenn das Federelement auf Anschlag gespannt ist. Als Zustand, in welchem das Federelement auf Anschlag gespannt ist, wird insbesondere ein Zustand angesehen, in welchem der maximale Weg, welche das, insbesondere auf Druck belastete, Federelement verformbar ist, vollständig ausgereizt ist. Im Falle einer auf Anschläge gespannten Tellerfeder als Federelement bedeutet dies, dass die Tellerfeder bis zu einer ebenen Fläche verformt wird. Das Federelement ist dabei speziell so ausgelegt, dass in diesem Zustand die gewünschte vordefinierte maximale Vorspannkraft vorliegt. Insbesondere wird dadurch erreicht, dass bei einer lebensdauerabhängigen plastischen Verformung der Batterieanordnung stets eine ausreichend hohe Vorspannkraft vorliegt, um eine zuverlässige mechanische Fixierung der Batteriezellen zu gewährleisten. Beispielsweise wird hierdurch vermieden, dass durch eine lebensdauerabhängige plastische Stauchung der Batteriezellen und/oder Dehnung der Zuganker die Vorspannkraft so weit abnimmt, dass die mechanische Fixierung der Batteriezellen unerwünscht gelockert wird.

Weiter bevorzugt basiert die vordefinierte maximale Vorspannkraft auf einer Fließgrenze eines Werkstoffs des Zugankers. Das heißt, der Zuganker ist vorzugsweise so ausgebildet, dass dieser zu fließen beginnt, also sich plastisch verformt, wenn die tatsächlich aufgebrachte Vorspannkraft die vordefinierte maximale Vorspannkraft übersteigt. Dadurch kann die Batterieanordnung beim Zusammenbau beispielsweise "überspannt" werden, sodass der Zuganker sich plastisch verformt. Anschließend stellt sich die resultierende Vorspannkraft so ein, dass die gewünschte vordefinierte maximale Vorspannkraft vorliegt, also so, dass das Federelement auf Anschlag gespannt ist und hinsichtlich einer Stauchung des Batterieparks einen Längenausgleich bewirken kann. Durch eine derartige Auslegung der Batterieanordnung kann beispielsweise eine einfache Anpassung der mechanischen Verspannung an unterschiedliche Batteriepacks erfolgen.

Vorzugsweise umfasst die Batterieanordnung ferner einen Zellhalter, in welchem die Batteriezellen aufgenommen sind. Der Zellhalter ist bevorzugt aus Kunststoff gebildet für eine besonders einfache und kostengünstige Herstellung. Der Zellhalter kann beispielsweise für eine Halterung der Batteriezellen, insbesondere in radialer Richtung, vorgesehen sein. Beispielsweise kann der Zellhalter Zwischenplatten aufweisen, welche zwischen zwei in axialer Richtung nebeneinander angeordneten Batteriezellen angeordnet sind. Ferner kann der Zellhalter beispielsweise Distanzplatten aufweisen, welche zwischen den Spannplatten und den Batteriezellen angeordnet sind. Der Zellhalter ermöglicht insbesondere einen einfachen Zusammenbau der Batterieanordnung. Im Falle eines aus Kunststoff ausgebildeten Zellhalters können dabei deutlich unterschiedliche temperaturabhängige Längenänderungen des Zellhalters und der, vorzugsweise aus Metall ausgebildeten, Batteriezellen, sowie des Zugankers auftreten. Durch die elastisch verformbaren Federelemente wird dabei dennoch sichergestellt, dass in sämtlichen Betriebszuständen eine zuverlässige mechanische Verspannung des Batteriepacks gewährleistet ist.

Besonders bevorzugt weist der Zuganker ein Gewinde und eine Mutter auf, um die Spannplatten zu verspannen. Vorzugsweise liegt die Mutter dabei an der Spannplatte oder an dem Federelement an. Die Vorspannkraft kann somit besonders einfach durch Anziehen der Mutter eingestellt werden.

Vorzugsweise umfasst die Batterieanordnung jeweils ein EMV-Ableitelement pro Spannplatte. Das EMV-Ableitelement kann beispielsweise als elektrische Leitung vorgesehen sein, und bewirkt vorzugsweise eine elektrische Verbindung der Spannplatten mit einer Masse, um eine galvanische Erdung der Spannplatten bereitzustellen.

### Kurze Beschreibung der Zeichnungen

Im Folgenden wird die Erfindung anhand von Ausführungsbeispielen in Verbindung mit den Figuren beschrieben. In den Figuren sind funktional gleiche Bauteile jeweils mit gleichen Bezugszeichen gekennzeichnet. Dabei zeigt:
- Figur 1: eine stark vereinfachte schematische Schnittansicht einer Batterieanordnung gemäß einem ersten Ausführungsbeispiel der Erfindung,
- Figur 2: eine perspektivische Detail-Ansicht einer Batterieanordnung gemäß einem zweiten Ausführungsbeispiel der Erfindung, und
- Figur 3: eine Detail-Schnittansicht der Batterieanordnung der Figur 2.

### Bevorzugte Ausführungsformen der Erfindung

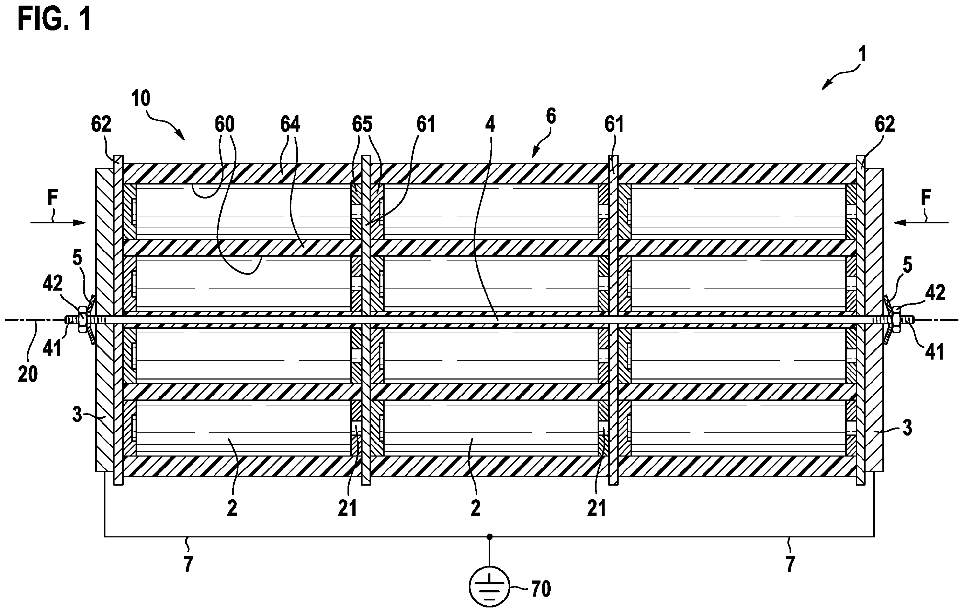

Die Figur 1 zeigt eine vereinfachte schematische Schnittansicht einer Batterieanordnung 1 gemäß einem ersten Ausführungsbeispiel der Erfindung. Die Batterieanordnung 1 umfasst einen Batteriepack 10 mit mehreren zylindrischen Batteriezellen 2. Sämtliche Batteriezellen 2 sind parallel zu einer Längsachse 20 angeordnet. Bezüglich der Längsachse 20 sind jeweils mehrere Batteriezellen 2 axial und radial nebeneinander angeordnet.

Die Batteriezellen 2 sind in einem Zellhalter 6 aufgenommen. Der Zellhalter 6 ist aus Kunststoff gebildet und stellt insbesondere eine radiale Positionierung der Batteriezellen 2 zueinander sicher. Der Zellhalter 6 weist pro Batteriezelle 2 jeweils eine Aussparung 60 auf, in welcher die Batteriezelle 2 angeordnet ist. Die Aussparungen 60 sind jeweils durch Zellhalterwände 64 voneinander getrennt.

Zudem weist der Zellhalter 6 Zwischenplatten 61 auf, welche in axialer Richtung zwischen den in axialer Richtung nebeneinander angeordneten Batteriezellen 2, das heißt zwischen jeweiligen Ebenen an Batteriezellen 2, angeordnet sind.

An den beiden Stirnseiten des Batteriepacks 10 ist jeweils eine Endplatte 62 des Zellhalters 6 vorgesehen. Der Zellhalter 6 bietet somit insbesondere einen Schutz der Batteriezellen 2 vor Umwelteinflüssen oder direkter Krafteinwirkung.

Pro Batteriezelle 2 weist der Zellhalter 6 zudem jeweils einen kreisringförmigen Abstandshalter 65 auf, welcher den Pluspol 21 der Batteriezelle 2 umgibt. Der Abstandshalter 65 ist dabei so ausgebildet, dass dieser zusammen mit dem Pluspol 21 eine ebene Stirnseite bildet, um eine gleichmäßige Verspannung der Batteriezellen 2 zu ermöglichen, wie nachfolgend beschrieben.

Um eine zuverlässige und definierte Halterung der Batteriezellen 2 zu ermöglichen, sind diese in Richtung der Längsachse 20 eingespannt. Hierfür umfasst die Batterieanordnung 1 zwei Spannplatten 3, einen Zuganker 4 und jeweils ein Federelement 5 pro Spannplatte 3.

Die Spannplatten 3 sind an jeweils einer axialen Stirnseite des Batteriepacks 10 an den Endplatten 62 angrenzend angeordnet. Mittels des Zugankers 4 sind die beiden Spannplatten 3 gegeneinander verspannt, um in axialer Richtung eine Vorspannkraft F auf den Batteriepack 10 aufzubringen.

Der Zuganker 4 erstreckt sich dabei durch den Batteriepack 10 hindurch und ist als Stab ausgebildet, welcher durch die Verspannung auf Zug beansprucht wird. Um die Spannplatten 3 gegeneinander zu verspannen, umfasst die Zuganker 4 an dessen axialen Enden jeweils ein Gewinde 41 und eine Mutter 42, wobei die Muttern 42 entsprechend gegeneinander verschraubt werden können, um die Vorspannkraft F einzustellen.

Jeweils zwischen der Mutter 42 des Zugankers 4 und der entsprechenden Spannplatte 3, ist eines der Federelemente 5 angeordnet. Die Federelemente 5 sind elastisch verformbar ausgebildet und erlauben dadurch einen Längenausgleich der Batteriezellen 2. Ein derartiger Längenausgleich kann beispielsweise bei sich ändernden Umgebungstemperaturen aufgrund unterschiedlicher Wärmeausdehnungskoeffizienten der Bauteile der Batterieanordnung 1 auftreten. Insbesondere der aus Kunststoff gebildete Zellhalter 6 kann einen deutlich anderen Wärmeausdehnungskoeffizienten als die Batteriezellen 2, oder der Zuganker 4, welche jeweils aus Metall gebildet sind, aufweisen. Ferner können die Federelemente 5 alterungsbedingte Längenänderungen, beispielsweise aufgrund von Kriechen, ausgleichen.

Ein weiterer Effekt der Federelemente 5 ist eine Reduktion äußerer mechanischer Krafteinwirkungen auf die Batteriezellen 2. Insbesondere bei einem Aufprall der Batterieanordnung 1 auf einen Boden, bewirkt die elastische Verformbarkeit der Federelemente 5 ein Abfedern des Batteriepacks 10. Dadurch kann vermieden werden, dass durch den Aufprall hohe mechanische Kräfte auf die Batteriezellen 2 wirken, und diese unter Umständen beschädigt werden.

Im Detail sind die Federelemente 5 als Tellerfedern ausgebildet. Das heißt, die Federelemente 5 sind als kegelige Ringschalen, die in axialer Richtung belastbar sind, ausgebildet. Wie in der Figur 1 zu erkennen, sind die Federelemente 5 dabei in Richtung einer dem Batteriepack 10 abgewandten Seite hin zulaufend angeordnet. Die Federelemente 5 sind dabei als separate Bauteile ausgebildet und jeweils zwischen der Spannplatte 3 und der Mutter 42 des Zugankers 4 angeordnet.

Die Federelemente 5 weisen eine geringe Federkonstante auf, sodass in Abhängigkeit eines Verformungsweges in Richtung der Längsachse 20 nur eine geringe Änderung der Vorspannkraft F eintritt. Das heißt, die Federelemente 5 ermöglichen eine näherungsweise Weg- bzw. Hub-unabhängige Verspannung der Batteriezellen 2, sodass besonders gezielt eine, im wesentlichen lebensdauerunabhängige, vordefinierte Vorspannkraft F eingestellt werden kann.

Weiterhin sind die Spannplatten 3 aus einem besonders steifen Material ausgebildet, sodass die Spannplatten 3 eine hohe Biegesteifigkeit aufweisen. Dadurch wird erreicht, dass die Vorspannkraft F möglichst homogen auf sämtliche Batteriezellen 2 verteilt wird. Das heißt, durch die hohe Biegesteifigkeit der Spannplatten 3 wird vermieden, dass sich diese im Bereich der Krafteinleitung, das heißt unmittelbar am Zuganker 4 durchbiegen und eine in radialer Richtung stark ungleichmäßige Krafteinleitung auf die Batteriezellen 2 bewirken.

Um ein besonders definiertes elastischen Verhalten der Anordnung, welches vorwiegend auf der Elastizität der Federelemente 5 basiert, zu erhalten, ist der Zuganker 4 ebenfalls aus einem besonders steifen Material gebildet. Eine wesentliche Dehnung des Zugankers 4 bei Belastung mit der Vorspannkraft F wird hierdurch vermieden. Dadurch wird sichergestellt, dass der Längenausgleich überwiegend, näherungsweise vollständig, durch die Federelemente 5 herbeigeführt wird.

An jeder der Spannplatten 3 ist zudem ein EMV-Ableitelement 7 in Form einer elektrischen Leitung vorgesehen, welches mit einer Masse 70 verbunden ist, um eine Erdung der Spannplatten 3 zu bewirken.

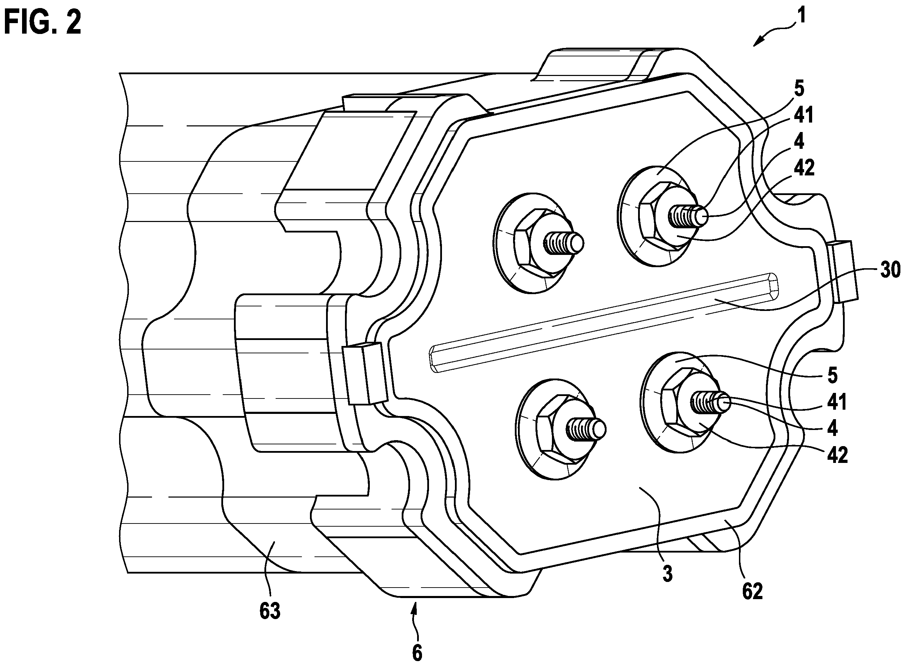

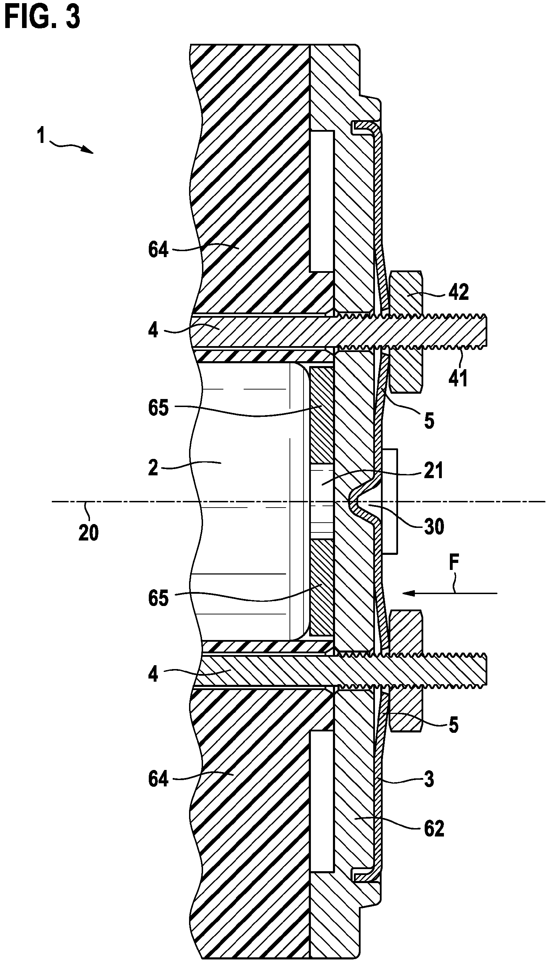

Die Figur 2 zeigt eine perspektivische Detail-Ansicht einer Batterieanordnung 1 gemäß einem zweiten Ausführungsbeispiel der Erfindung, und die Figur 3 zeigt eine Detail-Schnittansicht der Batterieanordnung der Figur 2. Das zweite Ausführungsbeispiel entspricht im Wesentlichen dem ersten Ausführungsbeispiel der Figur 1, mit dem Unterschied, dass mehrere Zuganker vorgesehen sind, und dass die Federelemente 5 und die Spannplatten 3 einstückig ausgebildet sind.

Wie insbesondere in der Figur 2 zu erkennen, umfasst das zweite Ausführungsbeispiel insgesamt vier Zuganker 4, welche über den Querschnitt des Batteriepacks 10 verteilt angeordnet sind. Zwischen jedem Zuganker 4 und jeder Spannplatte 3 ist dabei jeweils ein Federelement 5 vorgesehen, also vier Federelemente 5 pro Spannplatte 3. Dadurch kann eine besonders gleichmäßige Verteilung der Vorspannkraft F auf den Querschnitt des Batteriepacks 10 erreicht werden. Zudem können hierdurch besonders hohe Vorspannkräfte F erzielt werden.

Für eine zusätzliche Versteifung der Spannplatte 3 kann diese beispielsweise eine Sicke 30 umfassen, wie in den Figuren 2 und 3 dargestellt. Die Sicke 30 ist dabei mittig in der Spannplatte 3 jeweils zwischen zwei der Federelemente 5 vorgesehen.

Ferner sind die Spannplatten 3 und die jeweils angrenzenden Federelemente 5 im zweiten Ausführungsbeispiel zusammen als ein einstückiges Bauteil ausgebildet, wie insbesondere in der Figur 3 zu erkennen. Dadurch kann insbesondere eine Herstellung sowie ein Zusammenbau der Batterieanordnung 1 vereinfacht werden.

## Patentansprüche

1. Batterieanordnung, umfassend:
- einen Batteriepack (10) mit einer Vielzahl an jeweils parallel zu einer Längsachse (20) angeordneten zylindrischen Batteriezellen (2), wobei die Batteriezellen (2) axial und/oder radial nebeneinander angeordnet sind,
**gekennzeichnet durch**:
- zwei Spannplatten (3), welche an jeweils einer axialen Stirnseite des Batteriepacks (10) angeordnet sind,
- zumindest einen Zuganker (4), welcher eingerichtet ist, die beiden Spannplatten (3) gegeneinander zu verspannen, um eine Vorspannkraft (F) auf den Batteriepack (10) aufzubringen, und
- zumindest ein Federelement (5) pro Zuganker (4),
- wobei das Federelement (5) elastisch verformbar ausgebildet ist, um einen Längenausgleich der Batteriezellen (2) zu erlauben.

2. Batterieanordnung nach Anspruch 1, wobei das Federelement (5) zwischen dem Zuganker (4) und einer der beiden Spannplatten (3) angeordnet ist.

3. Batterieanordnung nach Anspruch 2, umfassend jeweils zwei Federelemente (5) pro Zuganker (4), wobei zwischen jeder Spannplatte (3) und jedem Zuganker (4) jeweils ein Federelement (5) angeordnet ist.

4. Batterieanordnung nach einem der vorhergehenden Ansprüche, wobei das Federelement (5) als Tellerfeder ausgebildet ist.

5. Batterieanordnung nach einem der vorhergehenden Ansprüche, wobei das Federelement (5) eine Federkonstante von maximal 1000 N/m aufweist.

6. Batterieanordnung nach einem der vorhergehenden Ansprüche, wobei die Spannplatten (3) eine Biegesteifigkeit von mindestens 5000 N/m aufweisen.

7. Batterieanordnung nach einem der vorhergehenden Ansprüche, wobei die Spannplatten (3) im unbelasteten Zustand gebogen ausgebildet sind, und insbesondere so ausgebildet sind, um unter Belastung mit der Vorspannkraft (F) ebene Platten zu bilden.

8. Batterieanordnung nach einem der vorhergehenden Ansprüche, wobei das Federelement (5) und die Spannplatte (3) als separate Bauteile ausgebildet sind.

9. Batterieanordnung nach einem der Ansprüche 1 bis 7, wobei das Federelement (5) und die Spannplatte (3) einstückig ausgebildet sind.

10. Batterieanordnung nach einem der vorhergehenden Ansprüche, wobei das Federelement (5) so ausgebildet ist, dass in einem auf Anschlag gespannten Zustand des Federelements (5) eine vordefinierte maximale Vorspannkraft (F) vorliegt.

11. Batterieanordnung nach Anspruch 10, wobei die vordefinierte maximale Vorspannkraft (F) auf einer Fließgrenze eines Werkstoffs des Zugankers (4) basiert.

12. Batterieanordnung nach einem der vorhergehenden Ansprüche, ferner umfassend einen Zellhalter (6), in welchem die Batteriezellen (2) aufgenommen sind, wobei der Zellhalter (6) insbesondere aus Kunststoff gebildet ist.

13. Batterieanordnung nach einem der vorhergehenden Ansprüche, wobei der Zuganker (4) ein Gewinde (41) und eine Mutter (42) aufweist, um die Spannplatten (3) zu verspannen.

14. Batterieanordnung nach einem der vorhergehenden Ansprüche, ferner umfassend jeweils ein Elektromagnetische Verträglichkeit-Ableitelement (7) pro Spannplatte (3).

## Claims

1. Battery assembly, comprising:
- a battery pack (10) having a plurality of cylindrical battery cells (2) each arranged parallel to a longitudinal axis (20), wherein the battery cells (2) are arranged axially and/or radially next to each other, **characterized by**:
- two clamping plates (3) which are arranged on in each case one axial end side of the battery pack (10),
- at least one tie rod (4) which is configured to brace the two clamping plates (3) against each other in order to apply a preloading force (F) to the battery pack (10), and
- at least one spring element (5) for each tie rod (4),
- wherein the spring element (5) is elastically deformable in order to allow length compensation of the battery cells (2).

2. Battery assembly according to Claim 1, wherein the spring element (5) is arranged between the tie rod (4) and one of the two clamping plates (3).

3. Battery assembly according to Claim 2, comprising two spring elements (5) for each tie rod (4), wherein a spring element (5) is arranged between each clamping plate (3) and each tie rod (4) in each case.

4. Battery assembly according to any of the preceding claims, wherein the spring element (5) is designed as a plate spring.

5. Battery assembly according to any of the preceding claims, wherein the spring element (5) has a spring constant of at most 1000 N/m.

6. Battery assembly according to any of the preceding claims, wherein the clamping plates (3) have a bending stiffness of at least 5000 N/m.

7. Battery assembly according to any of the preceding claims, wherein the clamping plates (3) are bent in the loaded state, and in particular are designed so as to form flat plates under loading with the preloading force (F) .

8. Battery assembly according to any of the preceding claims, wherein the spring element (5) and the clamping plate (3) are designed as separate components.

9. Battery assembly according to any of Claims 1 to 7, wherein the spring element (5) and the clamping plate (3) are designed in one piece.

10. Battery assembly according to any of the preceding claims, wherein the spring element (5) is designed such that a predefined maximum preloading force (F) is applied in a state in which the spring element (5) is stretched to the limit.

11. Battery assembly according to Claim 10, wherein the predefined maximum preloading force (F) is based on a yield strength of a material of the tie rod (4).

12. Battery assembly according to any of the preceding claims, further comprising a cell holder (6) in which the battery cells (2) are accommodated, wherein the cell holder (6) is formed, in particular, from plastic.

13. Battery assembly according to any of the preceding claims, wherein the tie rod (4) has a thread (41) and a nut (42) in order to brace the clamping plates (3).

14. Battery assembly according to any of the preceding claims, further comprising an EMC discharge element (7) for each clamping plate (3).

## Revendications

1. Agencement de batterie comprenant :
- un bloc de batteries (10) avec une pluralité d'éléments de batterie (2) cylindriques disposés respectivement parallèlement à un axe longitudinal (20), les éléments de batterie (2) étant disposés axialement et/ou radialement les uns à côté des autres, **caractérisé par** :
- deux plaques de serrage (3), qui sont disposées chacune sur un côté frontal axial du bloc de batteries (10),
- au moins un tirant (4) qui est conçu pour serrer les deux plaques de serrage (3) l'une contre l'autre afin d'appliquer une force de précontrainte (F) sur le bloc de batteries (10), et
- par tirant (4), au moins un élément à ressort (5),
- l'élément à ressort (5) étant conçu de manière à apte à être déformé élastiquement afin de permettre une compensation de la longueur des éléments de batterie (2).

2. Agencement de batterie selon la revendication 1, dans lequel l'élément à ressort (5) est disposé entre le tirant (4) et l'une des deux plaques de serrage (3).

3. Agencement de batterie selon la revendication 2, comprenant deux éléments élastiques (5) par tirant (4), un élément à ressort (5) étant disposé entre chaque plaque de serrage (3) et chaque tirant (4).

4. Agencement de batterie selon l'une des revendications précédentes, dans lequel l'élément à ressort (5) est conçu sous la forme d'une rondelle-ressort.

5. Agencement de batterie selon l'une des revendications précédentes, dans lequel l'élément à ressort (5) présente une constante de ressort d'un maximum de 1000 N/m.

6. Agencement de batterie selon l'une des revendications précédentes, dans lequel les plaques de serrage (3) présentent une résistance à la flexion d'au moins 5000 N/m.

7. Agencement de batterie selon l'une des revendications précédentes, dans lequel les plaques de serrage (3) sont formées de manière à être courbées à l'état non chargé, et sont notamment conçues pour former des plaques planes lorsqu'elles sont chargées par la force de précontrainte (F).

8. Agencement de batterie selon l'une des revendications précédentes, dans lequel l'élément à ressort (5) et la plaque de serrage (3) sont conçus sous la forme de composants séparés.

9. Agencement de batterie selon l'une des revendications 1 à 7, dans lequel l'élément à ressort (5) et la plaque de serrage (3) sont formés d'une seule pièce.

10. Agencement de batterie selon l'une des revendications précédentes, dans lequel l'élément à ressort (5) est conçu de telle sorte qu'une force de précontrainte maximale prédéfinie (F) soit présente lorsque l'élément à ressort (5) est dans un état tendu jusqu'à être en butée.

11. Agencement de batterie selon la revendication 10, dans lequel la force de précontrainte maximale prédéfinie (F) est basée sur une limite d'élasticité d'un matériau du tirant (4).

12. Agencement de batterie selon l'une des revendications précédentes, comprenant en outre un support d'éléments (6) dans lequel sont logés les éléments de batterie (2), le support d'éléments (6) étant notamment formé en matière plastique.

13. Agencement de batterie selon l'une quelconque des revendications précédentes, dans lequel le tirant (4) présente un filetage (41) et un écrou (42) pour serrer les plaques de serrage (3).

14. Agencement de batterie selon l'une des revendications précédentes, comprenant en outre un élément de dissipation de la compatibilité électromagnétique (7) par plaque de serrage (3).
